# EUROPEAN PATENT SPECIFICATION

(11) **EP 1 993 221 B1**
(45) Date of publication and mention of the grant of the patent: **01.09.2010**
(21) Application number: 07106596.5
(22) Date of filing: 20.04.2007
(51) Int. Cl.: H04B 17/00, H04L 12/24

(54) **A method, arrangement, testing device and program for testing multimedia communication equipment and software**
Verfahren, Vorrichtung, Testgerät und Programm zum Testen von Multimediakommunikationsgeräten und -software
Procédé, arrangement, dispositif de test et programme pour tester équipement et logiciel de communication multimédia

(43) Date of publication of application: 19.11.2008
(73) Proprietor: NetHawk Oyj, 90570 Oulu (FI)
(72) Inventor: Bräysy, Vinski, FI-90460 Oulunsalo (FI)
(74) Representative: Brax, Matti Juhani

(56) References cited:
- EP-A1- 1 465 367
- US-B1- 6 526 259

## Description

### Technical field of the invention

The invention relates to a method for testing multimedia communication equipment, software and telecommunications networks utilized in multimedia transmissions. The invention also relates to a simulator or testing device utilizing the method. The invention relates also to a computer program product implementing the method.

### Background of the invention

At present multimedia transmissions through various telecommunications networks are increasing due to handheld mobile phones and PDAs. Multimedia transmissions can include for example text, pictures, voice or videos clips. The mentioned items in a multimedia transmission place different requirements on the utilized network. For example, if the network includes also a wireless path, this could be a problem if transmissions require high transmission speed. The requirements increase further if the multimedia transmission is a real-time application.

It is known that traffic in real packet telecommunication network is self-similar or as sometimes called in other words "fractal". Self-similarity in the context of a telecommunication network means that a traffic pattern and volume measured at one time scale is approximately the same as a traffic pattern measured at another time scale. This property can be utilized for generating a suitable traffic distribution for network testing. Examples of self-similar test methods are depicted for example in US 6 526 259 and EP 1 465 367.

In US 6 526 259 is depicted a method for mimicking a stream of self similar traffic in a telecommunication network. The method disclosed can be used for generating traffic having selected transmission characteristics. Some examples of the depicted characteristics are a mean arrival rate and a selected autocorrelation function. However, the content of the traffic is conventional data as for example normal audio or video frames.

EP 1 465 367 discloses a method for generating self-similar traffic by utilizing predetermined parameter.

In order to decrease need for transferring redundant multimedia information between parties in a data network it is common to compress information to be transferred somehow. One alternative is to use so-called lossy compression. In the lossy compression a decompressed file may be different from the original. However, it could still be in a useful format. Lossy compression methods are commonly used with multimedia data, i.e. audio, video and still images. This is especially true in streaming media and Internet telephony. Most lossy compression formats suffer from generation loss, i.e. repeatedly compressing and decompressing one and the same file will cause it to lose its original quality.

This is in contrast to lossless data compression methods which are preferred for text and data files.

When a user downloads a lossily compressed file, the retrieved file can be quite different from the original at least at the bit level. However, it can be indistinguishable to the human ear or eye.

Lossy compression methods are most often used for compressing sound, images or videos. The compression ratio of a lossy video codec is superior to those of the audio and still-image equivalents. Lossily compressed still images are often compressed to a tenth of their original size, but the quality loss is noticeable, especially on closer inspection. Audio files can often be compressed at 10:1 without loss of quality. However, video can be compressed 300:1 with little visible quality loss.

Therefore, the service users, service providers and network operators are willing to know how different network components work in practise and how it can be guaranteed that the quality of transmission during multimedia transmissions is high enough after different coders and decoders for different kinds of multimedia material.

It is quite problematic, however, to generate meaningful load having differents kind of test material to a device under test that can be further analyzed to determine quality of service (QoS). In the prior art it is known to use short audio and video samples for load generation. Adapting the samples to different devices under test requires for instance different resolution, frame rate and bandwidth. These requirements are problematic if the content should not degrade in this adaptation process.

One known testing method includes transmission of natural scenes through the telecommunications network. The natural scenes are resolution dependent and therefore difficult to produce with varying size or frame rate. In addition, complex natural scenes require large memory capacity in the test equipment. Moreover, natural scenes as test patterns are not deterministic, which makes evaluation of the quality of test transmissions difficult.

It is known to analyze telecommunications networks by using network simulators of different kinds. US 6 057 882 depicts a testing system by which coder/decoder transmission systems can be tested using an artificial video sequence. According to the reference a transmitter device produces synthetic test patterns which include shapes of known artefacts. Created artefacts are transmitted through the transmission chain under test. The receiving party gets in addition to the test patterns also synchronization information and pattern customization information. With the synchronization information and pattern customization information the receiving party can create a comparison pattern for testing purposes. The system disclosed in US 6 057 882 concentrates only on testing how transmission properties of the network affect test images and video scenes. As noted above, requirements of video compression differ quite much for example from requirements of compression of human voice. Therefore there is a need for a simulation method which could be utilized together with all kinds of multimedia transmissions.

### Summary of the invention

The object of the present invention is to provide a testing method and a testing system by which all kinds of multimedia files included in a multimedia transmission can be used for real-time testing the quality of telecommunication devices, either hardware or software implemented.

The objects of the present invention are fulfilled by providing a method for generating multimedia patterns for transmission system quality testing, the method comprising the steps of
- generating testing patterns comprising several frames, and
- transmitting said testing patterns to a transmission system under test,
in which method the frames of the testing patterns are generated using fractal functions.

The objects of the present invention are also fulfilled by providing a method for evaluating quality of a transmission system comprising the steps of
- receiving testing patterns comprising several frames from the transmission system,
- decoding and decompressing received testing patterns, and
- evaluating the decompressed testing patterns against comparison testing patterns,
in which method the frames of the received testing patterns and the comparison testing patterns are generated using fractal functions.

The objects of the present invention are also fulfilled by providing a method for testing a transmission system,
the method comprising the steps of
- generating testing patterns comprising several frames,
- compressing and encoding testing patterns for transmission,
- transmitting encoded testing patterns,
- receiving transmitted test patterns,
- decoding and decompressing received testing patterns, and
- evaluating the received test patterns against comparison testing patterns,
in which method the frames of the received testing patterns and the comparison testing patterns are generated using fractal functions.

The objects of the present invention are also fulfilled by providing a method for testing telecommunication software, the method comprising the steps of
- generating a testing frame,
- transmitting the testing frame to a telecommunication software under test,
- processing the frame by the telecommunication software,
- receiving the frame from the telecommunication software, and
- evaluating the received frame against a comparison frame,
in which method the received testing frame and comparison frame are generated using fractal functions.

The objects of the present invention are also fulfilled by providing a network simulator comprising
- a control logic for controlling the simulator operations,
- a test pattern generator for creating test patterns comprising several frames,
- a compressor for compressing the frames,
- a memory for saving the compressed frames,
- an encoder for encoding the frames, and
- an IP server for transmitting the encoded frames to a device under test,
where the test pattern generator is a fractal function generator.

The objects of the present invention are also fulfilled by providing a computer program product for generating multimedia patterns for transmission system quality testing comprising
- a computer readable code means for generating testing patterns comprising several frames, and
- a computer readable code means for transmitting said testing patterns to a transmission system under test,
where the computer readable code means for generating the frames of the testing patterns comprises computer readable code means for generating the frames using fractal functions.

The objects of the present invention are also fulfilled by providing a computer program product for evaluating quality of a transmission system comprising
- a computer readable code means for receiving testing patterns comprising several frames from the transmission system,
- a computer readable code means for decoding and decompressing received testing patterns,
- a computer readable code means for evaluating the decompressed testing patterns against comparison testing patterns, and
- computer readable code means for generating frames of the comparison testing patterns using fractal functions,
where the computer readable code means for generating frames of the comparison testing patterns comprises computer readable code means for generating the frames using fractal functions.

The objects of the present invention are also fulfilled by providing a computer program product for implementing a telecommunication software tester, the computer product comprising
- a computer readable code means for generating a test frame,
- a computer readable code means for conveying the test frame to software under test,
- a computer readable code means for receiving the test frame from software under test, and
- a computer readable code means for comparing the received frame against a comparison frame,
where the computer readable code means for generating the test frame and comparison frame comprises computer readable code means for generating the frames using fractal functions.

Some advantageous embodiments of the invention are disclosed in the dependent claims.

An advantage of the invention is that providing fractal functions from the simulator to the device under test is enough. Using the fractal functions, the devise under test can create exact copies of the transmitted audio or video stream comprising several frames for evaluation purposes. Therefore, there is no need to transport a real reference audio or video stream from the server to the client for quality evaluation purposes.

Another advantage of the invention is that there is no need to store the reference content for testing purposes in the client device under test and therefore the quality evaluation can be done also in devices which have only a small memory.

Another advantage of the invention is that there is no need to provide special synchronization information between the client and the server throughout the test session.

Another advantage of the invention is that it is possible to perform real time quality evaluation of multimedia stream.

A further advantage of the invention is that the content generation can be adjusted to different screen sizes, frame rates and quality requirements for testing for example scaling circuits or image enhancing circuits or software.

Further scope of applicability of the present invention will become apparent from the detailed description given hereafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief description of the drawings

The present invention will become more fully understood from the detailed description given herein below and the accompanying drawings which are given by way of illustration only, and thus are not limitative of the present invention and wherein
- Fig. 1: shows a schematical representation of a simulator arrangement for testing a device under test,
- Fig. 2a: shows a schematical representation of a simulator arrangement for testing a transmission system,
- Fig. 2b: shows a schematical representation of a testing arrangement for testing a telecommunication software application,
- Fig. 3a: shows as an exemplary flow chart including main stages of creating fractal test patterns for device under test,
- Fig 3b: shows as an exemplary flow chart including main stages of evaluating quality of fractal test patterns processed in device under test, and
- Fig. 4: shows as an exemplary flow chart main stages of using fractal test patterns for telecommunication software testing.

### Detailed description

The present invention applies fractal functions by which so-called fractals can be created. A fractal is for example a geometric shape that can be subdivided into parts, each of which is at least approximately a reduced-size copy of the whole. A fractal as a geometric object generally has the following features:
- It has a simple and recursive definition.
- Its dimension can also be a decimal number. Therefore it is too irregular to be easily described in traditional Euclidean geometric language.
- It has a fine structure at arbitrarily small scales.
- It is self-similar.

Because fractals appear similar at all levels of magnification, fractals are often considered to be infinitely complex. Natural objects that approximate fractals to a degree include clouds, mountain ranges, and voice. The properties of fractals make them suitable to be used with any kind of multimedia transmission simulations. By fractals can be simulated for example pictures, videos or voices.

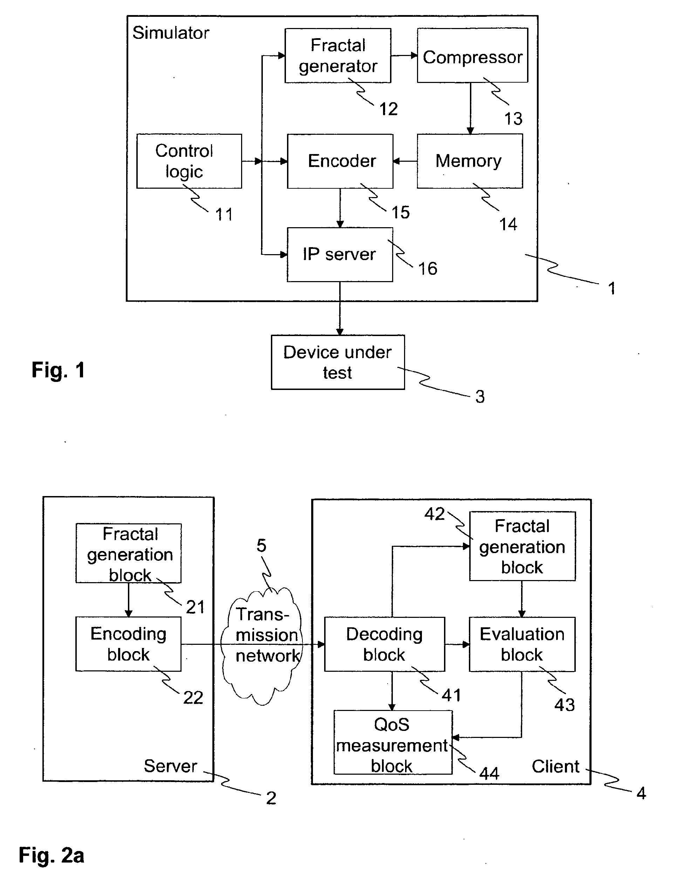

Fig. 1 depicts an exemplary simulator or load tester 1 according to the invention. It comprises control logic 11, fractal generator 12, compressor 13 and encoder 15 which all can advantageously be implemented by software means. The simulator 1 further comprises a memory unit 14 and an IP server 16.

The control logic 11 controls load testing or simulation session. The control logic 11 can advantageously comprise both hardware and software components. The control logic 11 advantageously controls the fractal generator 12 according to the invention. Under its control the fractal generator 12 generates either video or audio frames or both by using proper fractal functions.

The created video or audio frames are then sent to a compressor 13 that compresses raw audio or video frames to compressed audio or video frames. The compressor can utilize any compression algorithm known in the art. The compressed frames are advantageously saved into the memory 14. The saved compressed frames can advantageously afterwards be used in load generation.

In a test session the control logic 11 creates a number of multimedia connections to the device under test 3 using the IP server 16. The control logic 11 commands the IP server 16 to retrieve suitable compressed audio or video frames from the memory 14. Then frames from the memory retrieved are advantageously encoded for transmission by the encoder 15 using proper encoding algorithm. After that the IP server 16 transmits encoded multimedia streams to the device under test 3.

The device under test 3 can be some network node, for example a base station. The device under test can advantageously comprise also a means by which it can evaluate how well it managed in the load test.

Fig. 2a illustrates an example on how the present invention can be utilized in testing transmission quality of a telecommunication network in real time. Fig. 2a depicts as an example a testing arrangement for testing multimedia quality over a transmission network 5.

A testing arrangement according to the invention comprises a server 2 for generating content for multimedia testing and a client 4 for measuring quality of received multimedia content. The client 4 can advantageously be a software application residing in a mobile device. It can also be an electronic device which is utilized as a telecommunication network tester.

The server 2 comprises advantageously a fractal generation block 21 where multimedia content is generated using proper fractal functions. The fractal generation block 21 can advantageously be implemented by software means. The created multimedia content can be either voice or video frames or both.

Generated multimedia frames are advantageously first compressed in an encoding block 22 with some prior art compressing algorithm. The compressor 22 can advantageously be implemented by software means. The multimedia content can comprise portions compressed by different compression algorithms than the other portions. After compression the encoding block 22 encodes compressed frames to a proper transport format by using some proper prior art encoding algorithm of the transmission network 5. After that the server 2 sends the generated multimedia stream through the transmissions network 5 to the test client 4.

The client 4 comprises a decoding block 41, fractal generation block 42, evaluation block 43 and QoS measurement block 44 which are advantageously implemented by software means.

The decoding block 41 first decodes the received multimedia frames. In the second step it decompresses the audio and video frames to a raw format.

The fractal generation block 42 of the client 4 comprises software means which can generate a comparison multimedia content which equals to the content sent by the server 2. For doing that it advantageously receives from the server 2 fractal functions which are used in the multimedia content generation. The reference content, i.e. frames, is used in the evaluation block 43 for comparing the received multimedia content with the comparison multimedia content (i.e. original multimedia content). Sequence numbers of frames in the received multimedia streams can be used to synchronize the generated multimedia content with the received multimedia content.

The evaluation block 43 evaluates the quality of the received multimedia content. It compares the received multimedia frames with the comparison multimedia frames.

In the simplest form the evaluation can also be a subjective evaluation, i.e. the multimedia is played back using display and audio devices.

The generated comparison multimedia content can be used for comparison either in raw format, or in compressed-decompressed format. In an advantageous embodiment of the invention the received decompressed multimedia content is compared against the raw multimedia content and then both transport chain and used codecs have an effect on the received and decompressed multimedia content. In that case their combined effect can be evaluated.

In another advantageous embodiment of the invention a comparison is made between the actually received, decoded and decompressed multimedia content and a compressed-decompressed comparison multimedia content which is generated and processed by the fractal generation block 42. In that comparison effects of the used codecs can be eliminated. In this advantageous embodiment the quality of a transport chain 5 can be evaluated.

The client 4 advantageously also comprises a QoS measurement block 44 that can measure also other QoS parameters like jitter and packet loss occurring during multimedia transport. These results may advantageously be utilized in the evaluation block to form an overall quality score.

The quality testing arrangement according to the invention can be used for example for field testing downlink direction of mobile devices. In this case the server 2 is in the wired network like the Internet and the client 4 is in a device mobile travelling around wireless network.

The client 4 is advantageously a program module than can be loaded from the server 2 to a mobile device for evaluation of the end to end quality. So the arrangement according to the invention can be used to evaluate quality of service (QoS) experienced by a mobile device user.

The quality testing arrangement can be used also for uplink testing. In this embodiment of the invention the server 2 is in a mobile and the client 4 is part of the wired network 5.

In one advantageous embodiment both the client 4 and the server 2 are run in mobile devices. In case of using mobile devices for evaluation of the end to end quality, the fractal generation algorithms are advantageously coded using integer arithmetic.

If the client 4 according to the invention is a software application residing in a mobile terminal, it advantageously uses all appropriate resources of the mobile terminal when fulfilling its functions, i.e. it uses for example the processing unit, input and output means, display means and memory of the mobile terminal.

In one advantageous embodiment the client 4 is a protocol monitor that monitors one or more interfaces of a network. The protocol monitor uses the data generated by the server to evaluate effect of network load etc. to the multimedia quality transmitted through the network.

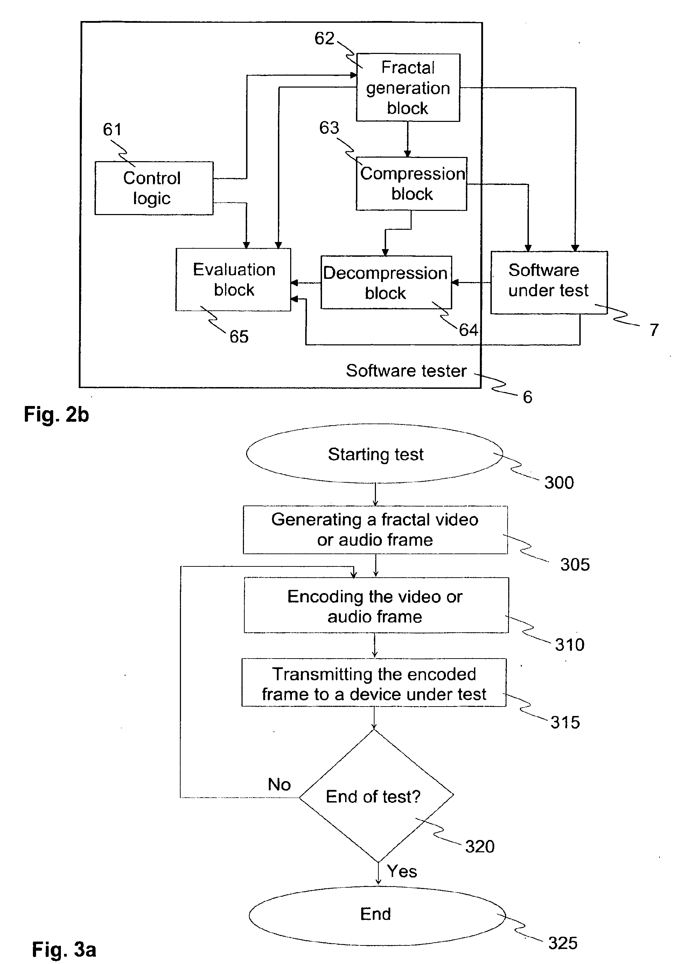

Fig. 2b illustrates an example of a testing arrangement for testing quality of a telecommunication software application 7. The software application 7 in the example of Fig. 2b can be used in the implementation of for example a compression codec, decompression codec or both.

The testing arrangement of Fig. 2b comprises a software tester 6 for generating content for testing and evaluating quality of the codec under test. Both compression codecs and decompression codecs can be tested using the software tester 6 according to the invention. Depending on test purpose, the software tester 6 may contain compression codec block 63 or decompression codec block 64 or both of the codecs can be in the system under test.

The software tester 6 comprises advantageously software implemented control logic 61. It controls advantageously function of the fractal generation block 62 and quality evaluation block 65. The multimedia content used in testing is generated in fractal generation block 62 using proper fractal functions. The fractal generation block can advantageously be implemented by software means. The created multimedia content can be either voice or video frames or both.

The created frames of multimedia content can be utilized either compressed or uncompressed. In one advantageous embodiment uncompressed frames of the multimedia content are conveyed directly to software under test 7. After processing the frames it conveys them directly to the evaluation block 65. The evaluation block 65 can utilize either direct copies of generated frames from fractal generation block 62 as comparison frames or use compressed-decompressed frames by using compression block 63 and decompression block 64 one after the other.

In another advantageous embodiment frames of the multimedia content are first compressed using some prior art compression algorithm in a compression block 63 before conveying them to the software under test 7. After proper processing, the frames are conveyed from the software under test 7 to a decompression block 64. The decompression block 64 then decompresses the software-processed frames and conveys them to the evaluation block 65. The used comparison frames can be created in either of the ways depicted above.

The evaluation block 65 evaluates the quality of the received frames of the multimedia content. It compares the received multimedia frames with the comparison multimedia frames. The comparison frames can be the raw frames generated by fractal generation block 62 or compressed-decompressed frames, depending on test purpose. The evaluation results can be used to assess functionality and quality of the tested telecommunication software application.

The software tester 6 according to the invention can be implemented either by software or in combination with a special hardware arrangement.

The main steps for generating and transmitting multimedia content according to the invention for a device under test 3 are shown in an exemplary flow chart of Fig. 3a.

The testing process starts in step 300 where the content of the multimedia test patterns is defined. The definition is advantageously fulfilled by defining proper fractal functions by which frames of the test patterns can be created.

In step 305 a fractal generation block 21 belonging to a simulator 1 or server 2 generates needed multimedia frames using the defined fractal functions and saves them into a memory of the simulator or server.

In step 310 a multimedia frame is first retrieved from the memory and then compressed and encoded by some prior art algorithms. This is accomplished by an encoding block 22 of the simulator or server.

In step 315 transmission means of the simulator or server transmits the encoded multimedia frame to the client 4.

In step 320 it is checked if the transmitted multimedia frame was the last frame of the test. If it is decided that it was not the last multimedia frame, the process returns to the step 310 where a new multimedia frame is retrieved from the memory and the process continues in the way depicted above.

If it is decided in step 320 that the transmitted multimedia frame was the last one belonging to the test pattern, then the transmission of the test frames ends in step 325.

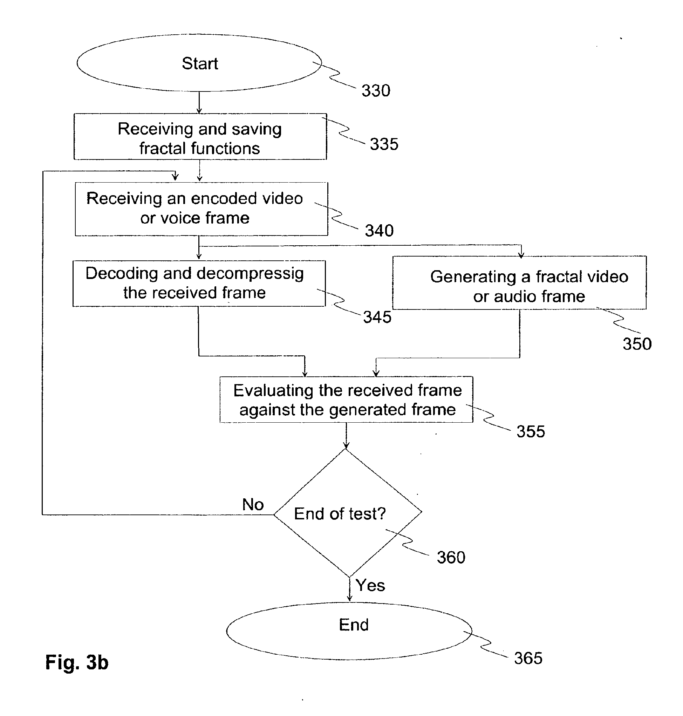

The main steps for evaluating received multimedia content, which is processed in a device under test 3, are shown in an exemplary flow chart of Fig. 3b.

The testing process starts in step 330 where a client 4 is set to standby mode and is waiting for a test transmission.

Step 335 is optional. It is utilized in a test case where the client 4 does not know beforehand those fractal functions which will be used in the test session. If step 335 is needed, then in step 335 the client 4 receives fractal functions which are used for creating the multimedia content. The client 4 saves the received fractal functions in a memory which it can utilize.

In step 340 the client 4 receives an encoded multimedia frame which belongs to the test session. The client notices that it is a test frame and therefore the client device activates its fractal generation block 42.

Steps 345 and 350 are executed parallelly in the client 4. In step 345 the decoding block 41 of the client 4 decodes and decompresses the received frame of a test pattern. In parallel in step 350 the fractal generation block 42 of the client 4 generates a comparison frame using fractal functions equal to those used in the server which has transmitted the frame. The result is a corresponding comparison frame for evaluation.

In one advantageous embodiment of the invention, step 350 comprises also an optional sub-phase where the created comparison frame is compressed and encoded using the same algorithms as the server 2, and after that decoded and decompressed using the same algorithms as did the client 4 when it received the multimedia frame. By doing that it is possible dismiss effects of the used codecs for testing purposes. After that the process continues in both embodiments in step 355.

In step 355 the evaluation block 43 evaluates the received test frame against the comparison frame which was created by the fractal generation block 42. The evaluation block comprises proper evaluation means for making the comparison and reporting the result. The comparison result can be saved for example in QoS measurement block 44 of the client 4. The QoS measurement block can comprise also other quality parameters such as jitter and packet loss occurring during multimedia transport.

After evaluation of the received frame it is tested in step 360 if the frame was the last test frame. If it was not the last one the process returns to step 340 where a new test frame is received, and the process continues in the above-described manner. However, if it is decided in step 360 that the frame was the last one, the test process ends in step 365.

The method steps depicted in figures 3a and 3b can advantageously be implemented by proper software programs. One software program according to the invention can be saved in a memory of the transmitting device and another software program in the memory of the receiving device. Said programs can be executed in processor units of said devices.

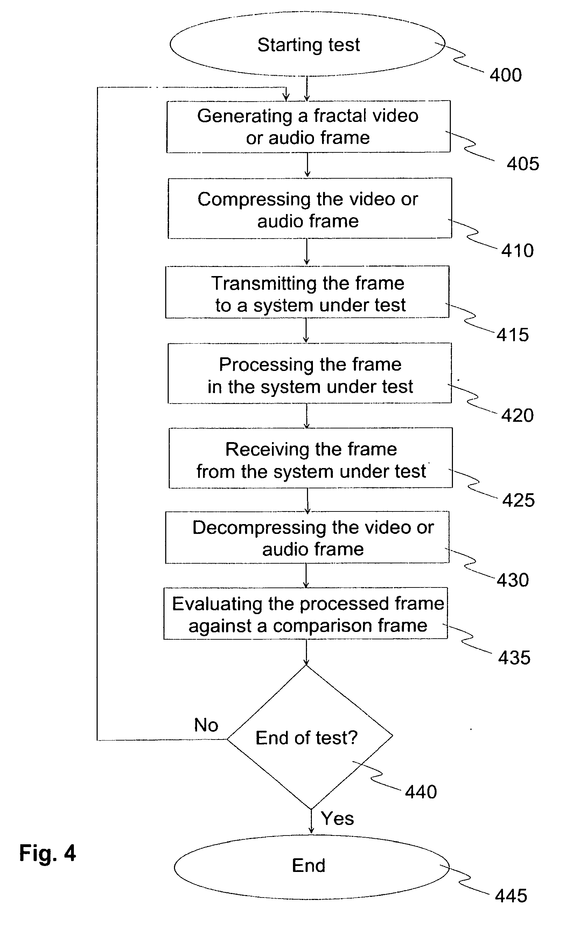

The main steps for generating and using fractal multimedia frames in testing a system under test 7, i.e. a telecommunication software application, are shown in an exemplary flow chart of Fig. 4. The system under test 7 can be some software-based function utilized in telecommunication, for example a codec, scaling circuit / software or image enhancing circuit / software.

The testing process starts in step 400 where the software tester 6 is in a standby mode. The generation of a test frame can be advantageously started and fulfilled by proper fractal functions in step 405.

In one advantageous embodiment the multimedia test frames are already defined beforehand and saved in a memory usable by the software tester 6. The test frames are then retrieved from the memory during the test session.

Step 410 is optional. It can be bypassed. In that advantageous embodiment raw fractal frames are conveyed directly to the system under test 7.

However, if step 410 is utilized a multimedia frame is compressed using some prior art compression algorithm before conveying it to the system under test 7. This is accomplished by a compression block 63 of the software tester 6.

In step 415 transmission means of the software tester 6 transmits the compressed multimedia frame to the system under test 7.

In step 420 the system under test 7 processes the received multimedia frame.

In step 425 receiving means of the software tester 6 receives the processed multimedia frame from the system under test 7.

Step 430 is optional. It can be bypassed in a case where raw fractal frames were conveyed to the system under test 7. In that case the processed frame can be directly conveyed to the evaluation block 65 for evaluation.

However, if in step 410 the frame was compressed before transmitting it then in step 430 the received processed multimedia frame is decompressed using some prior art compression algorithm before conveying it to the evaluation block 65. This is accomplished by a decompression block 64 of the software tester 6.

In step 435 the evaluation block 63 evaluates the received test frame against the comparison frame which is created by the fractal generation block 62. The evaluation block comprises proper evaluation means for making the comparison and reporting the result. The comparison result can be saved for example in QoS measurement block of the software tester (not shown in Fig. 4).

In step 440 it is checked if the evaluated multimedia frame was the last frame of the test. If it is decided that it was not the last multimedia frame, the process returns to the step 405 where a new multimedia frame is created and the process continues in the way depicted above.

If it is decided in step 440 that the evaluated multimedia frame was the last one belonging to the test pattern, then the test ends in step 445.

The method steps depicted in Fig. 4 can advantageously be implemented by proper software programs. Software programs according to the invention can be saved in a memory usable by the software tester 6. Said programs can be executed in a processor unit of an electronic device where the software tester program is residing in.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. A method for generating multimedia patterns for transmission quality testing, the method comprising the steps of
- generating testing patterns comprising several frames (305);
- transmitting said testing patterns to a transmission system under test (315), **characterized in that** content of the frames of the testing patterns is generated using fractal functions (305).

2. The method according to claim 1, **characterized in that** the frames are compressed before transmission (310)

3. The method according to claim 1 or 2, **characterized in that** the frames are encoded before transmission (310).

4. The method according to claim 1, **characterized in that** the testing patterns are generated frame by frame.

5. The method according to claim 4, **characterized in that** the fractal functions create a voice frame.

6. The method according to claim 4, **characterized in that** the fractal functions create a video frame.

7. A method for evaluating quality of a transmission system comprising the steps of
- receiving testing patterns comprising several frames from a transmission system (340);
- decoding and decompressing received testing patterns (345); and
- evaluating the decompressed testing patterns against comparison testing patterns (355),
**characterized in that** content of the frames of the received testing patterns and the comparison testing patterns are generated using fractal functions.

8. The method according to claim 7, **characterized in that** fractal functions used in generation of the testing patterns are received before receiving the testing patterns.

9. The method according to claim 7, **characterized in that** the testing patterns are evaluated frame by frame.

10. The method according to claim 9, **characterized in that** the fractal functions create a voice frame.

11. The method according to claim 9, **characterized in that** the fractal functions create a video frame.

12. The method according to claims 1 and 7, **characterized in that** for testing a transmission system comprising an encoder, a transmission channel and a decoder, the method comprises further:
- compressing and encoding the testing patterns before transmission (310).

13. The method according to claim 12, **characterized in that** the fractal functions used in generation of the frames of the testing patterns are transmitted from a sending device (1, 2) to a receiving device (3, 4) during the test session (335).

14. The method according to claim 13, **characterized in that** the fractal functions creates a voice frame.

15. The method according to claim 13, **characterized in that** the fractal functions create a video frame.

16. The method according to claims 1 and 7, **characterized in that** for testing telecommunication software, the method comprises the steps of:
- generating a testing frame (405);
- transmitting the testing frame to a telecommunication software under test (415);
- processing the frame by the telecommunication software (420);
- receiving the frame from the telecommunication software (425); and
- evaluating the received frame against a comparison frame (435).

17. The method according to claim 16, **characterized in that** the frame is compressed before transmission (410) and decompressed before evaluation (430).

18. The method according to claim 16, **characterized in that** the fractal functions, create a voice frame.

19. The method according to claim 16, **characterized in that** the fractal functions create a video frame.

20. A network simulator (1) comprising:
- a control logic (11, 61) for controlling the simulator operations;
- a test pattern generator (12, 62) for creating test patterns comprising several frames;
- a compressor (13) for compressing the frames;
- a memory (14) for saving the compressed frames;
- an encoder (15) for encoding the frames; and
- an IP server (16) for transmitting the encoded frames to a device under test (3), **characterized in that** the test pattern generator (12) is configured to generate a content of the frames utilizing fractal functions.

21. The network simulator according to claim 20, **characterized in that** for implementing a telecommunication software tester (6) it further comprises:
- a means for conveying the test frame to software under test (7);
- a means for receiving the test frame from software under test; and
- a means (65) for comparing the received frame against a comparison frame.

22. A computer program product for generating multimedia patterns for telecommunication system quality testing comprising:
- a computer readable code means for generating testing patterns comprising several frames; and
- a computer readable code means for transmitting said testing patterns to a system under test,
**characterized in that** the computer readable code means for generating the frames of the testing patterns comprises computer readable code means for generating content of the frames using fractal functions.

23. A computer program product for evaluating quality of a transmission system comprising:
- a computer readable code means for receiving testing patterns comprising several frames from the transmission system;
- a computer readable code means for decoding and decompressing received testing patterns; and
- a computer readable code means for evaluating the decompressed testing patterns against comparison testing patterns,
**characterized in that** it comprises computer readable code means for generating content of frames of the comparison testing patterns using fractal functions.

24. The computer program product according to claims 18 and 19, **characterized in that** in combination they are configured to implement a telecommunication software tester (6).

## Patentansprüche

1. Verfahren zum Erzeugen von Multimediamustern zur Übertragungsqualitätsprüfung, wobei das Verfahren die Schritte umfasst:
Erzeugen von Prüfmustern, welche mehrere Frames (305) umfassen;
Übertragen der Prüfmuster an ein zu prüfendes Übertragungssystem (315),
**dadurch gekennzeichnet, dass** der Inhalt der Frames der Prüfmuster unter Nutzung von Fraktalfunktionen (305) erzeugt wird.

2. Verfahren nach Anspruch 1, **dadurch gekennzeichnet, dass** die Frames vor der Übertragung (310) komprimiert werden.

3. Verfahren nach Anspruch 1 oder 2, **dadurch gekennzeichnet, dass** die Frames vor der Übertragung (310) encodiert werden.

4. Verfahren nach Anspruch 1, **dadurch gekennzeichnet, dass** die Prüfmuster Frame für Frame erzeugt werden.

5. Verfahren nach Anspruch 4, **dadurch gekennzeichnet, dass** die Fraktalfunktionen einen Sprach-Frame erstellen.

6. Verfahren nach Anspruch 4, **dadurch gekennzeichnet, dass** die Fraktalfunktionen einen Video-Frame erstellen.

7. Verfahren zum Evaluieren der Qualität eines Übertragungssystems, welches die Schritte umfasst:
Empfangen von Prüfmustern, welche mehrere Frames umfassen, von einem Übertragungssystem (340);
Decodieren und Dekomprimieren der empfangenen Prüfmuster (345) ; und
Evaluieren der dekomprimierten Prüfmuster gegenüber Vergleichsprüfmustern (355),
**dadurch gekennzeichnet, dass** der Inhalt der Frames der empfangenen Prüfmuster und die Vergleichsprüfmuster unter Nutzung von Fraktalfunktionen erzeugt werden.

8. Verfahren nach Anspruch 7, **dadurch gekennzeichnet, dass** Fraktalfunktionen, welche für die Erzeugung der Prüfmuster genutzt werden, empfangen werden, bevor die Prüfmuster empfangen werden.

9. Verfahren nach Anspruch 7, **dadurch gekennzeichnet, dass** die Prüfmuster Frame für Frame evaluiert werden.

10. Verfahren nach Anspruch 9, **dadurch gekennzeichnet, dass** die Fraktalfunktionen einen Sprach-Frame erstellen.

11. Verfahren nach Anspruch 9, **dadurch gekennzeichnet, dass** die Fraktalfunktionen einen Video-Frame erstellen.

12. Verfahren nach den Ansprüchen 1 und 7, **dadurch gekennzeichnet, dass** zum Prüfen eines Übertragungssystems, welches einen Encoder, einen Übertragungskanal und einen Decoder umfasst, das Verfahren ferner umfasst:
Komprimieren und Encodieren der Prüfmuster vor dem Übertragen (310).

13. Verfahren nach Anspruch 12, **dadurch gekennzeichnet, dass** die Fraktalfunktionen, welche für die Erzeugung der Frames der Prüfmuster genutzt werden, von einer Sendevorrichtung (1, 2) an eine Empfangsvorrichtung (3, 4) während der Prüfsitzung (335) übertragen werden.

14. Verfahren nach Anspruch 13, **dadurch gekennzeichnet, dass** die Fraktalfunktionen einen Sprach-Frame erstellen.

15. Verfahren nach Anspruch 13, **dadurch gekennzeichnet, dass** die Fraktalfunktionen einen Video-Frame erstellen.

16. Verfahren nach Ansprüchen 1 und 7, **dadurch gekennzeichnet, dass** zum Prüfen von Telekommunikations-Software das Verfahren die Schritte umfasst:
Erzeugen eines Prüf-Frames (405);
Übertragen des Prüf-Frames an eine zu prüfende Telekommunikations-Software (415);
Verarbeiten des Frames durch die Telekommunikations-Software (420);
Empfangen des Frames aus der Telekommunikations-Software (425); und
Evaluieren des empfangenen Frames gegenüber einem Vergleichs-Frame (435).

17. Verfahren nach Anspruch 16, **dadurch gekennzeichnet, dass** der Frame vor der Übertragung (410) komprimiert wird und vor der Evaluation (430) dekomprimiert wird.

18. Verfahren nach Anspruch 16, **dadurch gekennzeichnet, dass** die Fraktalfunktionen einen Sprach-Frame erstellen.

19. Verfahren nach Anspruch 16, **dadurch gekennzeichnet, dass** die Fraktalfunktionen einen Video-Frame erstellen.

20. Netzwerksimulator (1), welcher umfasst:
eine Steuerungslogik (11, 61) zum Steuern der Simulatoroperationen;
einen Prüfmustererzeuger (12, 62) zum Erstellen von Prüfmustern, welche mehrere Frames umfassen;
einen Komprimierer (13) zum Komprimieren der Frames;
einen Speicher (14) zum Speichern der komprimierten Frames;
einen Encodierer (15) zum Encodieren der Frames; und
einen IP-Server (16) zum Übertragen der encodierten Frames an eine zu prüfende Vorrichtung (3), **dadurch gekennzeichnet, dass** der Prüfmustererzeuger (12) konfiguriert ist, einen Inhalt der Frames unter Nutzung von Fraktalfunktionen zu erzeugen.

21. Netzwerksimulator nach Anspruch 20, **dadurch gekennzeichnet, dass** er zum Implementieren eines Telekommunikations-Softwareprüfers (6) ferner umfasst:
ein Mittel zum Übermitteln des Prüf-Frames an zu prüfende Software (7);
ein Mittel zum Empfangen des Prüf-Frames aus zu prüfender Software; und ein Mittel (65) zum Vergleichen des empfangenen Frames gegen einen Vergleichs-Frame.

22. Computerprogrammprodukt zum Erzeugen von Multimediamustern zum Prüfen von Telekommunikationssystem-Qualität, welches umfasst:
ein computerlesbares Codemittel zum Erzeugen von Prüfmustern, welche mehrere Frames umfassen; und
ein computerlesbares Codemittel zum Übertragen der Prüfmuster an ein zu prüfendes System,
**dadurch gekennzeichnet, dass** das computerlesbare Codemittel zum Erzeugen der Frames der Prüfmuster computerlesbare Codemittel zum Erzeugen von Inhalt der Frames unter Nutzung von Fraktalfunktionen umfasst.

23. Computerprogrammprodukt zum Evaluieren der Qualität eines Übertragungssystems, welches umfasst:
ein computerlesbares Codemittel zum Empfangen von Prüfmustern, welche mehrere Frames umfassen, von dem Übertragungssystem;
ein computerlesbares Codemittel zum Decodieren und Dekomprimieren der empfangenen Prüfmuster; und
ein computerlesbares Codemittel zum Evaluieren der dekomprimierten Prüfmuster gegenüber Vergleichsprüfmustern,
**dadurch gekennzeichnet, dass** es computerlesbare Codemittel umfasst zum Erzeugen von Inhalt von Frames der Vergleichs-Prüfmuster unter Nutzung von Fraktalfunktionen.

24. Computerprogrammprodukt nach Anspruch 18 und 19, **dadurch gekennzeichnet, dass** sie in Kombination konfiguriert sind, einen Telekommunikations-Softwareprüfer (6) zu implementieren.

## Revendications

1. Procédé pour générer des modèles multimédia pour tester la qualité d'une transmission, le procédé comportant les étapes consistant à
générer des modèles de test comportant plusieurs trames (305) ;
transmettre lesdits modèles de test à un système de transmission subissant le test (315),
**caractérisé en ce que** le contenu des trames des modèles de test est généré en utilisant des fonctions fractales (305).

2. Procédé selon la revendication 1, **caractérisé en ce que** les trames sont compressées avant la transmission (310).

3. Procédé selon la revendication 1 ou 2, **caractérisé en ce que** les trames sont codées avant la transmission (310).

4. Procédé selon la revendication 1, **caractérisé en ce que** les modèles de test sont générés trame par trame.

5. Procédé selon la revendication 4, **caractérisé en ce que** les fonctions fractales créent une trame vocale.

6. Procédé selon la revendication 4, **caractérisé en ce que** les fonctions fractales créent une trame vidéo.

7. Procédé pour évaluer la qualité d'un système de transmission comportant les étapes consistant à
recevoir les modèles de test comportant plusieurs trames pour un système de transmission (340) ;
décoder et décompresser les modèles de test reçus (345) ; et
évaluer les modèles de test décompressés par rapport aux modèles de test de comparaison (355),
**caractérisé en ce que** le contenu des trames des modèles de test reçus et des modèles de test de comparaison est généré en utilisant des fonctions fractales.

8. Procédé selon la revendication 7, **caractérisé en ce que** les fonctions fractales utilisées dans la génération des modèles de test sont reçues avant la réception des modèles de test.

9. Procédé selon la revendication 7, **caractérisé en ce que** les modèles de test sont évalués trame par trame.

10. Procédé selon la revendication 9, **caractérisé en ce que** les fonctions fractales créent une trame vocale.

11. Procédé selon la revendication 9, **caractérisé en ce que** les fonctions fractales créent une trame vidéo.

12. Procédé selon les revendications 1 et 7, **caractérisé en ce que**, pour tester un système de transmission comportant un codeur, un canal de transmission et un décodeur, le procédé comporte en outre :
la compression et le codage des modèles de test avant la transmission (310).

13. Procédé selon la revendication 12, **caractérisé en ce que** les fonctions fractales utilisées dans la génération des trames des modèles de test sont transmises depuis un dispositif d'envoi (1, 2) vers un dispositif de réception (3, 4) pendant la session de test (335).

14. Procédé selon la revendication 13, **caractérisé en ce que** les fonctions fractales créent une trame vocale.

15. Procédé selon la revendication 13, **caractérisé en ce que** les fonctions fractales créent une trame vidéo.

16. Procédé selon les revendications 1 et 7, **caractérisé en ce que**, pour tester un logiciel de télécommunications, le procédé comporte les étapes consistant à :
générer une trame de test (405) ;
transmettre la trame de test à un logiciel de télécommunications subissant le test (415) ;
traiter la trame grâce au logiciel de télécommunications (420) ;
recevoir la trame depuis le logiciel de télécommunications (425) ; et
évaluer la trame reçue par rapport à une trame de comparaison (435).

17. Procédé selon la revendication 16, **caractérisé en ce que** la trame est compressée avant la transmission (410) et décompressée avant l'évaluation (430).

18. Procédé selon la revendication 16, **caractérisé en ce que** les fonctions fractales créent une trame vocale.

19. Procédé selon la revendication 16, **caractérisé en ce que** les fonctions fractales créent une trame vidéo.

20. Simulateur de réseau (1) comportant :
une logique de commande (11, 61) pour commander les opérations du simulateur ;
un générateur de modèles de test (12, 62) pour créer des modèles de test comportant plusieurs trames ;
un compresseur (13) pour compresser les trames ;
une mémoire (14) pour sauvegarder les trames compressées ;
un codeur (15) pour coder les trames ; et
un serveur IP (16) pour transmettre les trames codées au dispositif subissant le test (3),
**caractérisé en ce que** le générateur de modèles de test (12) est configuré pour générer un contenu des trames utilisant les fonctions fractales.

21. Simulateur de réseau selon la revendication 20, **caractérisé en ce que**, pour réaliser un testeur de logiciel de télécommunications (6), il comporte en outre :
un moyen pour transporter la trame de test vers le logiciel subissant le test (7) ;
un moyen pour recevoir la trame de test depuis le logiciel subissant le test ; et
un moyen (65) pour comparer la trame reçue par rapport à une trame de comparaison.

22. Produit de programme informatique pour générer des modèles multimédia pour tester la qualité d'un système de télécommunications comportant :
un moyen de code pouvant être lu par un ordinateur pour générer des modèles de test comportant plusieurs trames ; et
un moyen de code pouvant être lu par un ordinateur pour transmettre lesdits modèles de test à un système subissant le test,
**caractérisé en ce que** le moyen de code pouvant être lu par un ordinateur pour générer les trames des modèles de test comporte des moyens de code pouvant être lus par un ordinateur pour générer le contenu des trames utilisant les fonctions fractales.

23. Produit de programme informatique pour évaluer la qualité d'un système de transmission comportant :
un moyen de code pouvant être lu par un ordinateur pour recevoir les modèles de test comportant plusieurs trames pour le système de transmission ;
un moyen de code pouvant être lu par un ordinateur pour décoder et décompresser les modèles de test reçus ; et
un moyen de code pouvant être lu par un ordinateur pour évaluer les modèles de test décompressés par rapport à des modèles de test de comparaison,
**caractérisé en ce qu'**il comporte des moyens de code pouvant être lus par un ordinateur pour générer le contenu des trames des modèles de test de comparaison utilisant les fonctions fractales.

24. Produit de programme informatique selon les revendications 18 et 19, **caractérisé en ce que**, en combinaison, ils sont configurés pour réaliser un testeur de logiciel de communication (6).
